(19) Europäisches Patentamt
European Patent Office
Office européen des brevets

(11) **EP 1 439 670 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(51) Int Cl.:
*H04L 12/403* (2006.01)   *H04L 29/02* (2006.01)
*B60H 1/00* (2006.01)

(21) Anmeldenummer: **03025582.2**

(22) Anmeldetag: **08.11.2003**

(54) **Verfahren und System zur Parametisierung von Buskomponenten**

Method and system for parameterization of bus components

Procédé et système de paramétrisation pour composants de bus

(84) Benannte Vertragsstaaten:
**DE FR GB SE**

(30) Priorität: **30.12.2002 DE 10261736**

(43) Veröffentlichungstag der Anmeldung:
**21.07.2004 Patentblatt 2004/30**

(73) Patentinhaber: **ROBERT BOSCH GMBH**
**70442 Stuttgart (DE)**

(72) Erfinder:
• **Eisenhardt, Harald**
**71277 Rutesheim (DE)**
• **Rasch, Bernhard**
**70736 Fellbach (DE)**

(56) Entgegenhaltungen:
EP-A- 1 223 710      WO-A-01/15920
WO-A-02/37923      DE-A1- 4 417 602
US-A- 6 098 098      US-B1- 6 446 201
US-B1- 6 460 356

EP 1 439 670 B1

**Beschreibung**

Stand der Technik

Die Erfindung betrifft ein Verfahren zur Parametrisierung fahrzeugspezifischer Eigentschaften von Buskomponenten eines Kraftfahrzeuginnenraumklimatisierungssystems.

Derzeit werden zur Prozesssteuerung auch im Kraftfahrzeug programmgesteuerte elektronische Komponenten in busvernetzten Systemen eingesetzt. Ein Beispiel hierfür ist die Kraftfahrzeuginnenraumklimatisierung, bei der eine programmgesteuerte Fahrzeugkilmaregeleinheit mit programmgesteuerten Gebläsereglern, Stelleinheiten und Sensoreinheiten über einen LIN-Bus kommuniziert Bislang wurden die Buskomponenten am Bandende, d.h. nach Abschluss der vollständigen Ausrüstung des Kraftfahrzeugs mit dem Innenraumklimatisierungssystem parametrisiert. Dadurch wurde eine Anpassung an die kraftfahrzeugspezifischen Eigenschaften vorgenommen. Dies hat den Nachteil, dass z.B. bei der Ersatztelllogistik von den Werkstätten die Buskomponenten fahrzeugspezifisch auf Lager gehalten oder In der Werkstatt programmiert werden mussten.

Weiterhin wurden bislang Geräteschutzfunktionen, wie z.B. Motorstrombegrenzung, Leistungsbegrenzung und/oder Temperaturbegrenzung bei Klimagebläsen der Kraftfahrzeuginnenraumklimatisierung nur statisch vorgegeben.

Derartige Schutzfunktionen sind in bisherigen Kraftfahrzeuginnenraumklimatisierungssystemen so ausgelegt, dass sie im Fahrzeug unter allen zulässigen Umgebungsbedingungen, wie Fahrzeugzustand, Toleranzlage, nicht ansprechen. Dies bedingt, dass für verschiedene Fahrzeugtypen unterschiedliche statische Schutzfunktionen vorgegeben und die Gebläsemotoren, die Zuheizsysteme und die ihnen zugeordneten Regeleinheiten häufig überdimensioniert werden mussten.

In der WO 02/37923 A Ist ein LIN-Bus im Kraftfahrzeug als Master-Slave-System konfiguriert. Eine Identifikationsinformation, genannt LIN-ID Ist durch einen Sonderbefehl vom Master zum Slave übertragbar und Im Slave speicherbar. Die LIN-ID gibt zu jeder in einem Festwertspelcher in dem Slave-Gerät fest gespeicherten Funktionsnummer des Slave-Geräts eine für das Kennungsfeld In den Befehlstelegrammen vorgesehen Kennungsinformation an. Das heißt, den Slave-Busteilnehmern werden vom Master die auszuführenden Funktionen zugeteilt.

Die WO 01/15920 A beschreibt für ein KraftfahrzeugInnenraumklimatisierungssystem ein normiertes Master-Slave-Bussystem. Ein einziges Klimabediengerät überträgt als Master im Rahmen des Busprotokolls die für den Betrieb der Klimaanlage im Kfz erforderlichen Informationen über den Bus an einen einzigen programmgesteuerten Gebläseregler.

EP 1223 710 A beschreibt ein verteiltes Steuer/Regelsystem nicht ausdrücklich für Kraftfahrzeuge, bei dem lediglich zeitweilig eine Master-Slave-Zuordnung des Busses vorliegt. Z.B. kann ein Überwachungsraum als Master fungleren und einem über ein Bus damit verbundenen oder verbindbaren Busteilnehmer neue Parameter zusenden. Dies kann ereignisgetriggert sein. Außerdem kann z.B. der Busteilnehmer, der an einem Ende des Busses liegt, vorläufig die Masterfunktion haben oder zugeteilt bekommen. Eine Übertragung dynamisch veränderlicher Parameter ist nicht beschrieben. Das Bussystem ist kein ständiges Master-Slave-System. Es werden auch Parameterdaten an einen Knoten von einem "monitoring room" aus übertragen, jedoch nur, wenn von letzterem der Arbeitspunkt eines Reglers geändert wird.

In der US 6,098,098 geht es primär um die Einbindung von mehreren Rechnern in ein Computer-Netzwerk. Dabei werden Daten von einem als Master arbeitenden Daten-Server an die einzelnen Rechner übertragen, wobei sich Jeder Rechner periodisch mit dem Server über das Netzwerk verbindet, um dann die auf Ihm gespeicherten Daten mit denen des Servers zu vergleichen und ggf. zu aktualisieren. Die Initiaitive für die Konfiguration geht von den einzelnen Rechnern derart aus, dass diese den Daten-Server periodisch abfragen, um dann etwaige Konfigurationsänderungen vom Daten-Server abzuspeichern oder an diesen zu übertragen.

Aufgabe und Vorteile der Erfindung

Angesichts der oben angeführten Nachteile der bekannten Verfahren und Systeme ist es Aufgabe der Erfindung, ein Verfahren zur Parametrisierung fahrzeugspezifischer Eigenschaften von Buskomponenten der Kfz-Innenraumklimatisierung anzugeben, welches es gestattet, dass fahrzeugübergrelfende identische Buskomponenten hergestellt und als Ersatzteile gelagert werden, die in der Applikation ohne zusätzliche Maßnahmen systemspezifisch bzw. kraftfahrzeugspezifisch konfiguriert werden können. Eine weitere Aufgabe besteht darin, dass das Verfahren derart eingerichtet sein soll, das auch im Betrieb des Fahrzeugs statische und dynamische Parameter an die Buskomponenten übertragbar sind. Diese Aufgaben werden anspruchsgemäß gelöst.

Als ersten wesentlichen Aspekt gibt die Erfindung ein Verfahren zur Parametrisierung fahrzeugspezifischer Eigenschaften von Buskomponenten eines in einem Fahrzeug eingesetzten Bussystems vor, wobei die Buskomponenten als programmgesteuerte Slave-Einheiten einer Kraftfahrzeuginnenraumklimatisierung durch das eine Master-Slave-Struktur aufweisende Bussystem mit einer als Fahrzeugklimaregeleinheit ausgestalteten, programmgesteuerten Master-Einheit kommunizieren können, und wobei den Buskomponenten zugeordnete individuelle Parameter von der Master-Einheit durch einen Parametrisierungsschritt einprogrammiert werden. Erfindungsgemäß ist vorgesehen, dass dieser Parametrisierungsschritt Innerhalb des Datenprotokolls des Bussystems zur Übertragung statischer und/oder dynamisch veränderlicher Parameter von der Master-Einheit ereignisgetriggert für jede Buskomponente einmalig zum Zeitpunkt und am Ort des Einbaus der Buskomponente In das Kraftfahrzeug und mehrfach wenigstens bei jedem Neustart des Kraftfahrzeugs durchgeführt wird..

Durch den erfindungsgemäßen Parametrisierungsschritt können somit die benötigten fahrzeugspezifischen Eigenschaften an die Buskomponente erst bei ihrem Einbau oder Austausch übertragen werden. Dadurch braucht keine Bandende- oder Variantenprogrammierung vorgenommen werden. Es können fahrzeugübergreifende identische Buskomponenten hergestellt werden, die durch den Parametrisierungsschrltt In der Applikation ohne zusätzliche Maßnahmen systemspezifisch konfiguriert werden.

Insbesondere bei Einsatz von ASICs (applikationsspezifische ICs) hat das erfindungsgemäße Verfahren Vorteile, da die Eigenschaften von ASICs nachträglich im Fahrzeug gezielt verändert werden können.

Die Parameterdaten brauchen in der Buskomponente nicht dauerhaft gespeichert werden, da sie spätestens bei jedem Neustart des Fahrzeugs oder öfter übertragen werden. Dadurch kann ein bei der Bandende-Programmierung sonst notwendiger Festwert- oder Haltespeicher in der Buskomponente entfallen.

Im Ersatzteilwesen müssen von den Werkstätten die Komponenten nicht mehr fahrzeugspezifisch programmiert werden. Es können systemübergreifend identische Ersatzteile verwendet werden.

Die an einen Gebläseregler als Buskomponente übertragenen statischen Parameter sind Insbesondere folgende:

- Wert der Maximalstrombegrenzung,
- Wert des Temperaturschutzes,
- Wert und Steigung der Leistungsbegrenzung für den Reglerschutz und den Motorschutz,
- Regelkonstanten für Spannungsregler,
- Regelkonstanten für Stromregler,
- Regelkonstanten für Temperaturregler,
- Verstärkungsfaktoren,
- Abgleichwerte.

Im Falle, dass die Buskomponente eine Komponente eines Zuhelzsystems Ist, sind die dieser übertragenen statischen Parameterdaten insbesondere folgende:

- Wert des Temperaturschutzes,
- Regelkreiskonstanten,
- Verstärkungsfaktoren,
- Abgleichwerte.

Schutzfunktionen, wie z.B. die Gebläsemotorstrombegrenzung, Gebläsemotorleistungsbegrenzung und Gebbläsemotortemperaturbegrenzung können bei Klimagebläsen der Kraftfahrzeug-Innenraumklimatisierung durch das erfindungsgemäße Verfahren dynamisch verändert werden. Für derartige dynamisch veränderbare Schutzfunktionen überträgt die Fahrzeugklimaregeleinheit im Parametrisierungsschritt an einen Gebläseregler unter anderem Parameter, die einen momentanen und/oder einen zu erwartenden Staudruck angeben.

Der Staudruck stellt sich In Abhängigkeit von den Randbedingungen, wie z.B. der Fahrzeuggeschwindigkeit, der Luftverteilung durch die Klimaanlage, der Fensterstellung u.s.w ein. Die Stromaufnahme des Gebläsemotors ist stark staudruckabhängig, da der Gebläsemotor wie eine hydraulische Maschine funktioniert. Bei einer Fensterverstellung ändert sich der Staudruck, so dass dabei der bei einer Fensterverstellung zu erwartende Staudruck als Parameter an den Gebläseregler übertragen wird, so dass dieser die Schutzfunktionen entsprechend ändern kann, z.B. durch eine Änderung des Regelalgorithmus.

Zur dynamischen Anpassung bzw. Änderung der Schutzfunktionen gehört auch die Anpassung an Spannungsänderungen am Gebläsemotor in Folge einer Änderung der Bordnetzspannung.

Bedingt durch das Schalten von Verbrauchern und Generatorspannungsändsrungen in Folge von Lastwechsel, Drehzahländerungen, Start/Stoppbetrieb des Verbrennungsmotors, Bremsenergierückspeisung u.s.w. ist die Bordnetzspannung nicht konstant. Änderungen der Bordnetzspannung sollten vom Klimagebläseregler ausgeregelt werden, so dass die Motordrehzahl unabhängig von der Bordnetzspannung wird. Zur Verbesserung der Ausregelzeit überträgt erfindungsgemäß die Fahrzeugklimaregeleinheit an den Gebläseregler einen der Änderung der Bordnetzspannung entsprechenden Parameter. Ideal ist es, wenn durch das Bordnetzenergiemanagement der Fahrzeugklimaregeleinhelt bzw. dem Klimagebläseregler dieser Information im Vorhinein zur Verfugung gestellt wird.

Die maximal mögliche Verlustleistung am Klimagebläse ist von der Umgebungstemperatur abhängig. Zum Schutz des Klimagebläses vor Übertemperatur ist deshalb die Kenntnis der Umgebungstemperatur erforderlich. Somit überträgt die Fahrzeugklimaregeleinheit bei einem weiteren vorteilhaften Ausführungsbeispiel einen der Umgebungstemperatur entsprechenden Parameter an den Gebläseregler. Bevorzugt Ist das die Temperatur der Luft, die vom Klimagebläse angesaugt wird. Wenn, wie die Erfindung vorschlägt, derartige Größen im Vorhinein als Parameter im Parametrisierungsschritt an den Gebläseregler übertragen werden, kann der Gebläseregler eine Vorsteuerung ausführen, z.B. indem er seinen Regelalgorithmus oder die Verstärkungsfaktoren der Regelkennlinie ändert.

Bei Umgebungstemperaturen unter dem Gefrierpunkt kann ein vereister Rotor des Klimagebläses blockieren. Zur Überwindung der Blockierung wird der Anlaufstrom erhöht, so dass sich ein erhöhtes Losreißmoment ergibt. Durch die Erhöhung des Stroms erhöht sich auch die Eigenerwärmung des Motors, die zur Enteisung des Motors führt. Somit kann dem Gebläseregler, wie die Erfindung vorschlägt, zur dynamischen Anpassung der Schutzfunktionen auch ein Parameter übertragen werden, der die Vereisung des Rotors bzw. dessen Stillstand angibt, um daraufhin die entsprechende Erhöhung des Anlaufstroms zu bewirken.

Die Stromaufnahme des Klimagebläses ist unter anderem abhängig von der Toleranzlage des Gebläsemotors, der Ausführung der Klimaanlage und der Fahrzeugvarlante. Die individuelle Motorkennlinie wird ausgemessen, und die Bewertung erfolgt in Abhängigkeit von den Umgebungsbedingungen, unter denen z.B. der Staudruck und die Temperatur sind. Somit können die Schutzfunktionen an den tatsächlich verbauten Gebläsemotor durch eine Parameterübertragung von der Fahrzeugklimaregeleinheit an den Gebläseregler angepasst werden.

Möglicherweise sind die der Parametrisierung zur dynamischen Anpassung der Schutzfunktionen zu Grunde liegenden Informationen nur indirekt verfügbar. Wenn der Staudruck und/oder die Temperatur der Ansaugluft nicht sensorisch gemessen werden, können sie alternativ auch aus bekannten Fahrzeugdaten ermittelt werden. Solche Fahrzeugdaten, die zur Ermittlung der Umgebungstemperatur für das Klimagebläse herangezogen werden können, sind z.B. die Außentemperatur, Heizwassertemperatur, Wärmetauschertemperatur, Verdampfertemperatur und/oder Innenraumtemperatur. Zur Ermittlung des Staudrucks können die Fensterstellung, die Schiebedachstellung, die Verdeckstellüng bei Cabriofahrzeugen u.s.w. herangezogen werden.

Mit dem erfindungsgemäßen Verfahren nach Anspruch 1 werden somit die Schutzfunktionen unter allen zulässigen Umgebungsbedingungen optimal ausgelegt, da sie dynamisch an sich verändernde Umgebungsbedingungen bzw. Betriebsbedinungen des Kraftfahrzeugs angepasst werden. Vorteilhafterweise werden dadurch Baugröße und Gewicht der Komponenten des Kraftfahrzeuginnenraumklimatisierungssystems verringert. Der Schutz für Gebläsemotor und Ansteuerelektronik wird verbessert.

Die obigen und weitere vorteilhafte Merkmale der Erfindung werden in der nachstehenden Beschreibung von Ausführungsund Applikationsbeispielen des erfindungsgemäßen Verfahrens und Systems noch deutlicher, wenn die Beschreibung bezogen auf die beiliegenden Zeichnungsfiguren studiert wird.

Zeichnung

- Figur 1 zeigt schematisch ein Blockschaltbild einer Konfiguration eines erfindungsgemäßen Beispiels eines Kraftfahrzeuginnenraumklimatisierungssystems, bei dem eine als Master fungierende Fahrzeugklimaregeleinheit durch einen LIN-Bus mit als Slave-Einheiten fungierenden Buskomponenten, wie z.B. Gebläsereglern, Sensoren und Aktuatoren verbunden ist;

- Figur 2 zeigt schematisch ein Blockdiagramm der Struktur der Master-Einheit (Fahrzeugklimaregeleinheit);

- Figur 3 zeigt ein Blockschaltbild der Struktur eines Gebläsereglers, und

- die Figuren 4A und 4B zeigen graphisch jeweils Resultate einer erfindungsgemäß ausgeführten dynamischen Leistungsbegrenzung eines Klimagebläsemotors jeweils ohne Staudruck und bei maximalem Staudruck.

Ausführungs- und Applikationsbeispiele

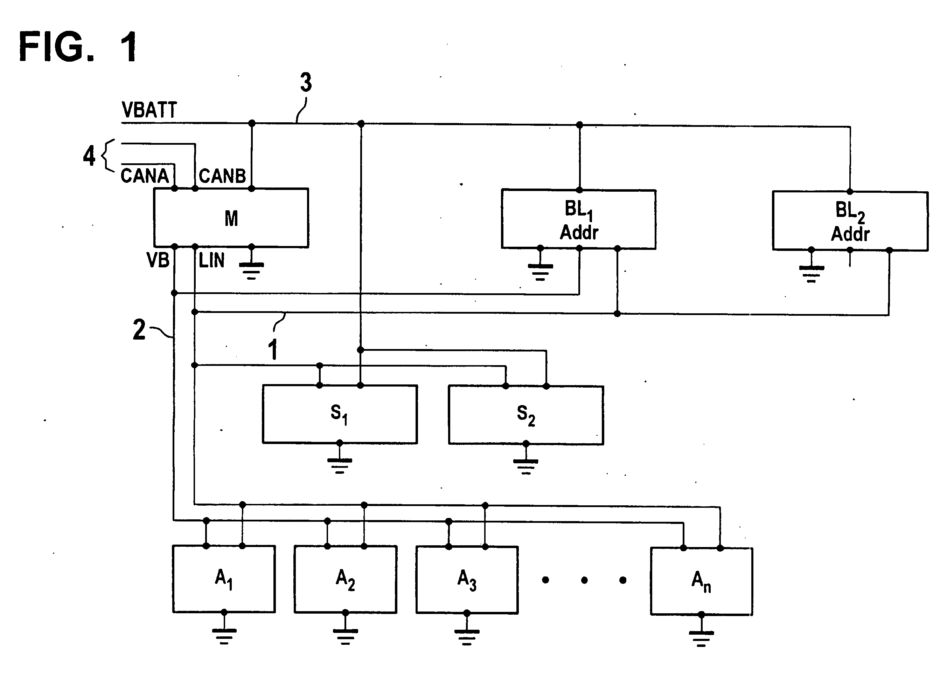

Die in Figur 1 als Blockdiagramm dargestellte erfindungsgemäße Systemkonfiguration wird zur Ausführung des erfindungsgemäßen Parametrisierungsverfahrens beispielhaft für Buskomponenten eines Fahrzeuginnenraumklimatisierungssystems beschrieben.

Eine als Master M fungierende Fahrzeugklimaregeleinheit ist durch ein LIN-Bussystem 1 mit verschiedenen Stellgliedern oder Aktuatoren A1, A2, A3, ... An, Gebläsereglern BL1, BL2 und Sensoren, z.B. einem Feuchtigkeitssensor S1 und einem Solarsensor S2, verbunden. Die Fahrzeugklimaregeleinheit M ist bevorzugt eine programmgesteuerte Mikroprozessoreinheit. Dasselbe gilt für die Gebläseregler BL1 und BL2, die dem Master M (der Fahrzeugklimaregeleinheit) als Slave-Einheiten untergeordnet sind. Es ist zu bemerken, dass BL1 z.B. einen Frontgebläseregler und BL2 einen Heckklimagebläseregler bezeichnen.

Die Fahrzeugklimaregeleinheit M, die Gebläseregler BL1, BL2 und die Sensoren S1 und S2 werden von einer die Bordnetzspannung $V_{BATT}$ zuführenden Speiseleitung 3 gespeist. Ferner steht die Fahrzeugklimaregeleinheit M mit anderen Fahrzeugsteuer-/regeleinheiten durch einen üblichen CAN-Bus 4 (Leitungen CANA, CANB) in Verbindung. Die Stellglieder A1, A2, A3, ... An werden durch eine von der Fahrzeugklimaregeleinheit M ausgegebene Speisespannung $V_B$ über eine Speiseleitung 2 versorgt. Gleichfalls wird diese Spannung $V_B$ auch an die Gebläseregler BL1, BL2 angelegt und dient darin zur Selektion der Adresse für die beiden Gebläseregler BL1 und BL2 (Beschreibung weiter unten).

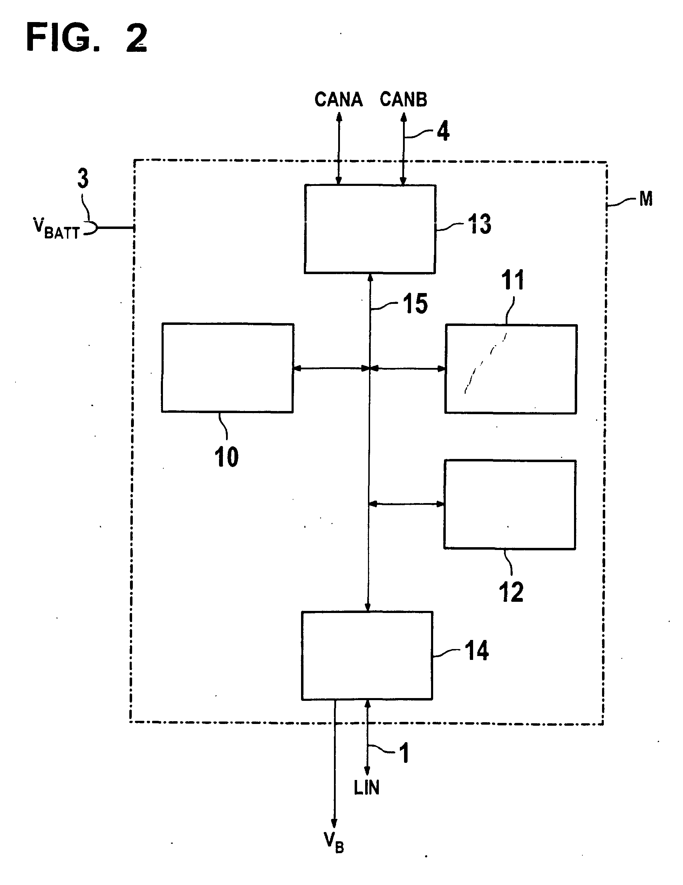

Das Blockschaltbild in Figur 2 zeigt eine übliche Konfiguration als Mikroprozessor ausgeführten programmgesteuerten Geräts, hier der Fahrzeugklimaregeleinheit M. Letztere enthält eine CPU 10, die über ein prozessorinternes Bussystem 15 mit einem Datenspeicher 11, einem Programmspeicher 12 und I/O-Einheiten 13 und 14 kommuniziert. Die erste I/O-Einheit 13 stellt die CAN-Busverbindung CAN A und CAN B der fahrzeugklimaregeleinheit M zu anderen Kraftfahrzeugsteuer- bzw. -regeleinheiten her, während die zweite I/O-Einheit 14 die Schnittstelle zum LIN-Bus bildet und die Spannung $V_B$ ausgibt.

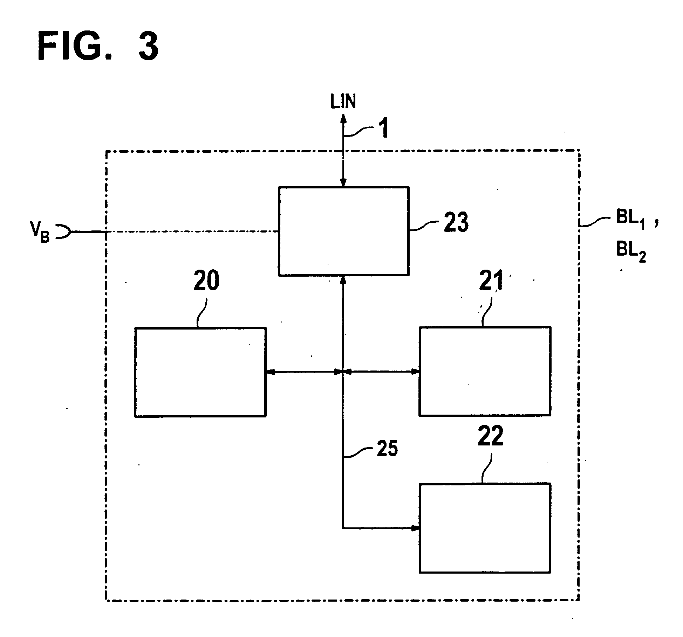

Figur 3 zeigt als Blockschaltbild eine beispielhafte Struktur der programmgesteuerten Buskomponenten BL1 und BL2, die durch eine übliche Mikroprozessoreinheit realisiert sind. Eine CPU 20 kommuniziert über ein prozessorinternes Bussystem 25 mit einem Datenspeicher 21 und einem Programmspeicher 22 sowie mit einer I/O-Einheit 23, die die Schnittstelle zum LIN-Bussystem 1 bildet. Die Stellglieder A1,A2,A3,...An und die Sensoren S1,S2 können die selbe oder eine ähnliche Struktur haben.

Durch das erfindungsgemäße Parametrisierungsverfahren ist in dem in Figur 3 dargestellten Gebläseregler BL1 bzw. BL2 kein Festwertdatenspeicher oder Haltespeicher notwendig, da die Parameterdaten in der Buskomponente, d.h. dem Gebläseregler BL1 und/oder BL2, nur zwischengespeichert werden müssen.

Zurück zu Figur 1, die als Blockschaltbild die Struktur des Gesamtsystems darstellt. Durch die erfindungsgemäße Parametrisierung der Buskomponenten, hier der Gebläseregler BL1, BL2, wird zunächst die Anpassung an die kraftfahrzeugspezifischen Eigenschaften vorgenommen. Diese Parametrisierung wird innerhalb des Datenprotokolls des LIN-Busses vom Master, d.h. der Fahrzeugklimaregeleinheit M, an die Buskomponente, hier den oder die Gebläseregler BL1 und/oder BL2, einmalig, mehrfach oder sogar zyklisch je nach gewünschter Systemkonfiguration übertragen.

Die benötigten fahrzeugspezifischen Eigenschaften werden erst zum Zeitpunkt und am Ort des Einbaus an die Buskomponenten übertragen. Deshalb muss keine Bandende- oder Variantenprogrammierung vorgenommen werden, und es können deshalb fahrzeugübergreifende identische Buskomponenten hergestellt und auf Lager gehalten werden, die in der Applikation durch das erfindungsgemäße Parametrisierungsverfahren systemspezifisch konfiguriert werden. Dieses Vorgehen hat insbesondere bei der Verwendung von ASICs Vorteile, da die Eigenschaften von ASICs nachträglich im Fahrzeug gezielt verändert werden können.

Nachstehend werden einige Beispiele für an die Gebläseregler BL1 und BL2 von der Fahrzeugklimaregeleinheit M über das LIN-Bussystem 1 übertragbare Parameter angeführt, ohne darauf beschränkt zu sein:

- Wert der Maximalstrombegrenzung,
- Wert des Temperaturschutzes,
- Wert und Steigung der Leistungsbegrenzung für den Reglerschutz und den Motorschutz,
- Regelkonstanten für Spannungsregler,
- Regelkonstanten für Stromregler,
- Regelkonstanten für Temperaturregler,
- Verstärkungsfaktoren,
- Abgleichwerte.

Weitere, in Figur 1 nicht dargestellte, Buskomponenten, die als Slave-Einheiten fungieren, können elektrische Zuheizsysteme sein, die die gleiche interne Struktur haben können, wie sie für die Gebläseregler BL1, BL2 in Figur 3 gezeigt ist.

Solchen elektrischen Zuheizsystemen können insbesondere folgende Parameter von der Fahrzeugklimaregeleinheit M übertragen werden:

- Wert des Temperaturschutzes,
- Regelkreiskonstanten,
- Verstärkungsfaktoren,
- Abgleichwerte.

Obwohl dies hier nicht im Einzelnen beschrieben ist, können mit dem erfindungsgemäßen Parametriesierungsverfahren auf der grundlage der in Fig.1 gezeigten Systemstruktur und des standardisierten LIN-Busprotokolls auch Parameterdaten zur Parametrisierung an die anderen Buskomponenten A1, A2, A3, ...An und S1, S2 übertragen werden.

**Erstes Applikationsbeispiel**

Nachfolgend wird ein erstes Beispiel für die Applikation der LIN-Busdatenkommunikation zwischen Master M (Fahrzeugklimaregeleinheit) und Slave (Gebläseregler) BL1 bzw. BL2 mit zyklischer Parametrisierung und erhöhter Datensicherheit veranschaulicht. Es ist zu bemerken, dass die den Applikationsbeispielen zugrundegelegte Datenstruktur und die angegebenen Parameterwerte selbstveständlich nur beispielhaft sind und nur zum besseren Verständnis des erfindungsgemäßen Parametrisierungsverfahrens dienen.

Anforderung Master-Gebläseregler (Identifier Field = 0xB1) 8-Byte-Nachricht

**Datenfeld 1**

| D10 | D11 | D12 | D13 | D14 | D15 | D16 | D17 |
|-----|-----|-----|-----|-----|-----|-----|-----|
| 1 | 2 | 3 | 4 | 5 | 6 | 7 | 8 |
| LSB | | | | | | | MSB |

D10 ... D17: 8 Datenbits: 0 bis 255
Funktion: Vorgabe Sollwert Motorspannung

| | |
|---|---|
| 0 ... 39: | 0,0 V |
| 40 ... 250: | 2,5 V bis 13,0 V |
| Auflösung: | 50 mV/Inc |
| 251 ... 255: | 13.0 V |

**Datenfeld 2**

| D20 | D21 | D22 | D23 | D24 | D25 | D26 | D27 |
|-----|-----|-----|-----|-----|-----|-----|-----|
| 9 | 10 | 11 | 12 | 13 | 14 | 15 | 16 |
| LSB | | | | | | | MSB |

D20 ... D23: 4 Datenbits: 0 bis 15
Vorgabe Rampenzeitkonstante $\ddot{A}U_{motor}$/s bei $U_{BATT}$ 13,5 V

| | | | | | |
|---|---|---|---|---|---|
| 0000 | 0,6 V/s | 0001 | 1,2 V/s | 0010 | 1,8 V/s |
| 0011 | 2,3 V/s | 0100 | 2,9 V/s | 0101 | 3,5 V/s |
| 0110 | 4,1 V/s | 0111 | 4,7 V/s | 1000 | 5,2 V/s |
| 1001 | 5,8 V/s | 1010 bis 1111 | 5,8 V/s | | |

D24 ... D27: Wert Anlaufstrombegrenzung
    0 ... 15: Anlaufstrom 1 A ... 15 A Auflösung 1A

**Datenfeld 3**

| D30 | D31 | D32 | D33 | D34 | D35 | D36 | D37 |
|-----|-----|-----|-----|-----|-----|-----|-----|
| 17 | 18 | 19 | 20 | 21 | 22 | 23 | 24 |
| X | X | X | X | X | X | X | X |
| LSB | | | | | | | MSB |

D30 ... D37: 8 Datenbits: Maximalwert Temperaturbegrenzung
    0 ... 190: Temperaturwert -40°C bis 150°C

**Datenfeld 4**

| D40 | D41 | D42 | D43 | D44 | D45 | D46 | D47 |
|-----|-----|-----|-----|-----|-----|-----|-----|
| 25 | 26 | 27 | 28 | 29 | 30 | 31 | 32 |
| X | X | X | X | X | X | X | X |
| LSB | | | | | | | MSB |

D40 ... D47: 8 Datenbits: Maximalwert Strombegrenzung
   1 ... 254: Wert Maximalstrom = Datenfeld4*0,2
      = 0,2 A ... 50,8 A

**Datenfeld 5**

| D50 | D51 | D52 | D53 | D54 | D55 | D56 | D57 |
|-----|-----|-----|-----|-----|-----|-----|-----|
| 33 | 34 | 35 | 36 | 37 | 38 | 39 | 40 |
| X | X | X | X | X | X | X | X |
| LSB | | | | | | | MSB |

D30 ... D37:   8 Datenbits: Regelzeitkonstante Temperatur-regler in s
   1 ... 254: Regelzeitkonstante 1 s...254 s

**Datenfeld 6**

| D60 | D61 | D62 | D63 | D64 | D65 | D66 | D67 |
|-----|-----|-----|-----|-----|-----|-----|-----|
| 41 | 42 | 43 | 44 | 45 | 46 | 47 | 48 |
| X | X | X | X | X | X | X | X |
| LSB | | | | | | | MSB |

D40 ... D47:   8 Datenbits: Regelzeitkonstante Stromregler
   1 ... 254: Regelzeitkonstante 4 ms...1016 ms

**Datenfeld 7**

| D70 | D71 | D72 | D73 | D74 | D75 | D76 | D77 |
|-----|-----|-----|-----|-----|-----|-----|-----|
| 49 | 50 | 51 | 52 | 53 | 54 | 55 | 56 |
| X | X | X | X | X | X | X | X |
| LSB | | | | | | | MSB |

D70 ... D77:   8 Datenbits: Regelzeitkonstante Spannungsregler
   1 ...254: Regelzeitkonstante 32 ms...8128 ms

**Datenfeld 8**

| D80 | D81 | D82 | D83 | D84 | D85 | D86 | D87 |
|-----|-----|-----|-----|-----|-----|-----|-----|
| 57 | 58 | 59 | 60 | 61 | 62 | 63 | 64 |
| X | X | X | X | X | X | X | X |
| LSB | | | | | | | MSB |

D80 ... D87: 8 Datenbits: Übertragung Paritätsbits für erhöhte Datensicherheit wegen Parametrierdaten
D80: Parität ODD von Datenfeld 1
D81: Parität ODD von Datenfeld 2
D82: Parität ODD von Datenfeld 3
D83: Parität ODD von Datenfeld 4
D84: Parität ODD von Datenfeld 5
D85: Parität ODD von Datenfeld 6
D86: Parität ODD von Datenfeld 7
D87: tbd

LSB: Niedrigstwertige Bitstelle
MSB: Höchstwertige Bitstelle

Es ist unmittelbar einleuchtend, dass das obige Beispiel einer zyklischen Parametrisierung eines der Gebläseregler, z.B. eines Frontgebläsereglers BL1, auch auf einen weiteren Gebläseregler BL2, z.B. einen Heckgebläseregler anwendbar ist, wenn diese identisch aufgebaut, die gleichen Gebläsemotoren ansteuern und dieselben Parameter erhalten. Dies ist natürlich nicht notwendigerweise so, d.h., dass der Frontgebläseregler seinen Gebläsemotor z.B. für eine unterschiedliche Drehzahl ansteuern kann.

Gegenüber der bisher üblichen Parametrisierung oder Variantenprogrammierung von elektronischen Komponenten im Kraftfahrzeug durch Bandendeprogrammierung derselben hat das oben anhand des Beispiels einer Kraftfahrzeuginnenraumklimatisierung beschriebene erfindungsgemäße Parametrisierungsverfahren und -system insbesondere folgende Vorteile:

- es gibt keine externe Einsatzdiagnose;
- alle Buskomponenten sind dem Master bekannt;
- das Verhalten der bekannten Buskomponente kann durch das Busprotokoll für den Einsatz in anderen Fahrzeugen angepasst werden;
- es ist eine zyklische Anpassung möglich und
- die Buskomponente braucht keinen internen veränderbaren Speicher für Initialisierungsmodus.

Wie erwähnt, können mit dem erfindungsgemäßen Parametrisierungsverfahren und - system die Schutzfunktionen, wie z.B. Motorstrombegrenzung, Leistungsbegrenzung, Temperaturbegrenzung bei Klimagebläsen einer Kraftfahrzeuginnenraumklimatisierung dynamisch an sich verändernde Umgebungsbedingungen und Betriebsbedingungen des Kraftfahrzeugs angepasst werden. Zu diesem Zweck werden von der Fahrzeugklimaregeleinheit M die zur Anpassung der Schutzfunktionen notwendigen Informationen ausgewertet und daraufhin durch das erfindungsgemäße Parametrisierungsverfahren über den LIN-Bus 1 Parameterdaten zur dynamischen Anpassung der Schutzfunktionen im Gebläseregler BL1 oder BL2 übertragen, d.h., dass die Schutzfunktionen darin in vorbestimmter Weise entsprechend den Umgebungsbedingungen und/oder Betriebsbedingungen des Kraftfahrzeugs angepasst werden.

**Zweites Applikationsbeispiel**

Das nachstehende Applikationsbeispiel beschreibt ein Beispiel für die Produkteigenschaftsauswahl durch permanente Übertragung der Auswahlparameter durch den LIN-Busmaster, d.h. die Fahrzeugklimaregeleinheit M, und die Auswahl der Leistungsbegrenzungskennlinie für unterschiedlich leistungsstarke Klimagebläsemotoren und eine staudruckabhängige (dynamische) Leistungsbegrenzung derselben.

Der Staudruck stellt sich in Abhängigkeit von den Randbedingungen, wie z.B. Fahrzeuggeschwindigkeit, Luftverteilung durch die Klimaanlage, Fensterstellung u.s.w. ein. Die Stromaufnahme des Gebläsemotors ist stark staudruckabhängig, da sich ein Gebläsemotor wie eine hydraulische Maschine verhält. Die Erfindung,legt die Schutzfunktionen des Gebläsereglers staudruckabhängig aus. Die Fahrzeugklimaregeleinheit liefert dem Gebläseregler dazu Information über den Staudruck bzw. bei Fensterverstellung oder Veränderung sonstiger Öffnungen des Fahrzeugs, wie z.B. des Fahrzeugverdecks, den zu erwartenden Staudruck.

**Parametrisierung Datenbyte 2; Dynamisch Datenbyte 3 und 4**

Im Beispiel werden zur Erhöhung der Datensicherheit für die Auswahlparameter mindestens 2 Bits innerhalb der Nachricht verwendet.

**1. Datenbyte**

| D10 | D11 | D12 | D13 | D14 | D15 | D16 | D17 |
|-----|-----|-----|-----|-----|-----|-----|-----|
| 1 | 2 | 3 | 4 | 5 | 6 | 7 | 8 |
| LSB | | | | | | | MSB |

D10 ... D17: 8 Datenbits: 0 bis 250

Funktion: Vorgabe Sollwert Motorspannung

**2. Datenbyte**

| D20 | D21 | D22 | D23 | D24 | D25 | D26 | D27 |
|-----|-----|-----|-----|-----|-----|-----|-----|
| 9 | 10 | 11 | 12 | 13 | 14 | 15 | 16 |
| LSB | | | | | | | MSB |

D20 ... D23: 4 Datenbits: 0 bis 15

Funktion:

Vorgabe Rampenzeitkonstante $\Delta U_{motor}$ / s

D24 ... D27: 4 Datenbits:

Funktion:

Vorgabe der Leistungsbegrenzungskennline (Parametrisierung)

0000: Leistungsbegrenzungskennlinie 1 (360 W Motor)

0101: Leistungsbegrenzungskennlinie 2 (320 W Motor)

1111: Leistungsbegrenzungskennlinie 3 (280 W Motor)

Ein Beispiel für eine Leistungsbegrenzungskennlinie für ein 360 W Klimagebläse ist nachstehend zu finden.

Im Fahrzeug x ist ein 360 W Klimagebläse verbaut. Die Fahrzeugklimaregeleinheit im Fahrzeug x überträgt in den Datenbits D24 bis D27 den Wert 0000. Die Produkteigenschaft des Gebläsereglers wird an die Bedingungen im Fahrzeug x angepasst.

Im Fahrzeug y des gleichen Herstellers ist ein 280 W Klimagebläse verbaut. Das Klimabediengerät im Fahrzeug y überträgt in den Datenbits D24 bis D27 den Wert 1111. Die Produkteigenschaft des Gebläsereglers wird an die Bedingungen im Fahrzeug y angepasst.

Im Ersatzteilwesen des Fahrzeugherstellers wird nur ein Gebläsereglertyp für beide Fahrzeuge geführt.

**3. Datenbyte**

| D30 | D31 | D32 | D33 | D34 | D35 | D36 | D37 |
|-----|-----|-----|-----|-----|-----|-----|-----|
| 17 | 18 | 19 | 20 | 21 | 22 | 23 | 24 |
| | | | LSB | | | | MSB |

D30 ... D33: 4 Datenbits:

Funktion:

Fahrgeschwindigkeit (**V**) Bereich 0 km/h ... 300km/h
(Dynamische Anpassung)

D34: 1 Datenbit

Fenster- und Schiebedachstellung 0: ZU, 1: AUF (Dynamische Anpassung)

D35 ... D37: 3 Datenbits

Klappenstellung Staudruckregelung 8 Zustände

000: Staudruckregelung 0%

001: Staudruckregelung 30%
010: Staudruckregelung 55%
011: Staudruckregelung 75%
100: Staudruckregelung 80%
101: Staudruckregelung 90%
110: Staudruckregelung 95%
111: Staudruckregelung 100% (Anhebung inaktiv)

(Parametrisierung der
dynamischen Anpassung)

Die Leistungsbegrenzungskennlinie für das Klimagebläse wird durch die Fahrbedingungszustände bzw. den Anlagenzustand angepasst.

**4. Datenbyte**

| D40 | D41 | D42 | D43 | D44 | D45 | D46 | D47 |
|-----|-----|-----|-----|-----|-----|-----|-----|
| 25 | 26 | 27 | 28 | 29 | 30 | 31 | 32 |
| LSB | | | | | | | MSB |

D40 ... D43: 4 Datenbits:

Funktion:
Prozentwert (Parametrisierung) Anhebung Leistungsbegrenzungskennlinie unter der Bedingung Fenster / Schiebedach AUF
Auflösung:
**%WERT** = (100% - Wert Staudruckregelung(D35... D37)) * (Prozentwert (D40 ... D43) + 1) * 0.1 = 1 % bis 32%

D44 ... D45: 2 Datenbits
Funktion:

Fahrgeschwindigkeitswert V0 ab der die Anhebung aktiviert werden soll:
Auflösung: 20 km/h / Inc + 80km/h Offset (**V0** = 80 km/h ... 140 km/h)

D46 ... D47: 2 Datenbits
Funktion:

Fahrgeschwindigkeitswert (V0 + VMAX) ab der die maximale Anhebung erreicht werden soll
Auflösung: 20 km/h /Inc (**VMAX** = +20km/h ... +80 km/h)

**Checksummenbyte**

| C0 | C1 | C2 | C3 | C4 | C5 | C6 | C7 |
|-----|-----|-----|-----|-----|-----|-----|-----|
| 33 | 34 | 35 | 36 | 37 | 38 | 39 | 40 |
| LSB | | | | | | | MSB |

C0 ... C7: 8-Datenbits: ADD-Checksumme mit "Carry" invertiert über die Datenbytes 1 bis 4

**Beispiel für eine mögliche dynamische Leistungsbegrenzungskennlinie**

Wenn Fahrgeschwindigkeit V (D30 ... D33) > Wert V0 (D44, D45) und Schiebedach / Fenster (D34) = AUF, dann erfolgt die dynamische Anpassung der Leistungsbegrenzung

Es folgt eine Berechnungsformel für die dynamische Anhebung der Leistungsbegrenzung.

Abkürzungen:

Dynamischer Wert der Leistungsbegrenzung: DPL
Statischer Wert der Leistungsbegrenzung: SPL

$$\texttt{Wenn V < V0}$$

$$\texttt{DPL = SPL}$$

$$\texttt{Wenn V > V0 und < (V0 + VMAX)}$$

$$\texttt{DPL = SPL * \%WERT * (V-V0) / VMAX}$$

$$\texttt{Wenn V > (V0 + VMAX)}$$

$$\texttt{DPL = SPL * \%WERT}$$

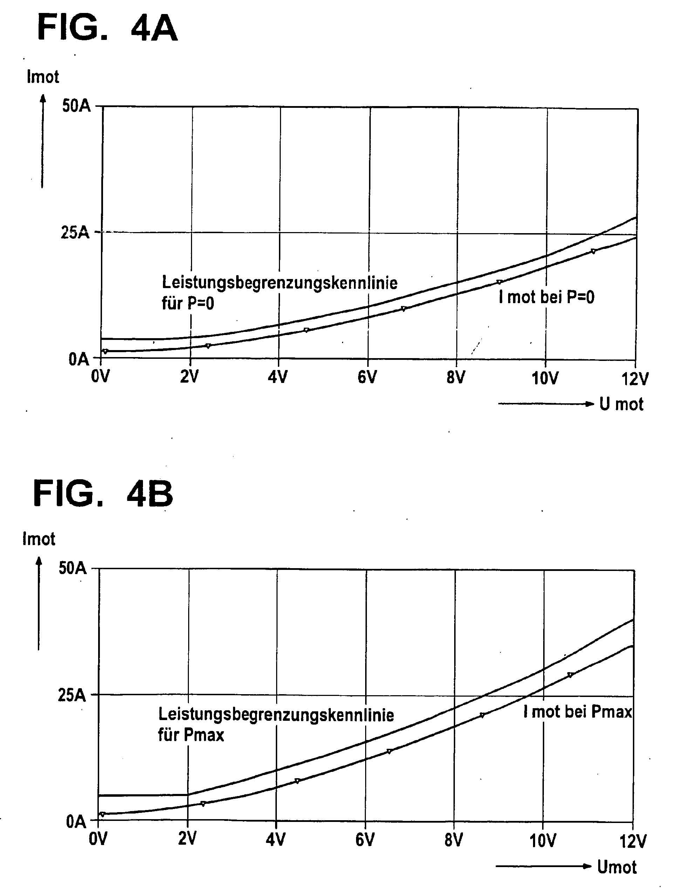

In den Figuren 4A und 4B sind grafisch staudruckabhängige Leistungsbegrenzungskennlinien angegeben, und zwar ohne Staudruck (P=0) und bei maximalem Staudruck ($P_{max}$). Die obere Linie gibt darin jeweils den Verlauf der Sollwerte und die untere Linie den gemessenen oder simulierten Verlauf der Leistungswerte an. Dabei lag selbstverständlich den Werten der Leistungsbegrenzungskennlinien, die in Figur 4A und 4B dargestellt sind, derselbe Gebläsemotor zu Grunde. Es ist deutlich zu erkennen, dass bei maximalem Staudruck die Stromaufnahme des Gebläsemotors erhöht ist.

Wie schon erwähnt und in Figur 1 dargestellt, kann eine Fahrzeuginnenraumklimaanlage auch mehrere Gebläsemotoren und dafür mehrere Gebläseregler BL1 und BL2, insbesondere für ein Frontgebläse und ein Heckgebläse enthalten. Dabei erfolgt die Adressselektion, d.h. die Selektion zwischen den beiden Gebläsereglern BL1 und BL2 durch Erkennung des Pegels am Adresseingang Addr der Versorgungsleitung 2. Die Adressvergabe als Frontgebläseregler BL1 erfolgt beispielsweise wenn während eines bestimmten festzulegenden Busbefehls ein High-Pegel am Adresseingang detektiert wird.

**Drittes Applikationsbeispiel**

Nachfolgend wird ein Beispiel für die Produkteigenschaftsauswahl durch permanente Übertragung der Auswahlparameter durch den LIN-Busmaster (Fahrzeugklimaregeleinheit) M und Auswahl der Leistungsbegrenzungskennlinie für unterschiedlich leistungsstarke Klimagebläsemotoren angeführt.

**Parametrisierung Datenbyte 2**

Im Beispiel werden zur Erhöhung der Datensicherheit für die Auswahlparameter mindestens 2 Bits innerhalb der Nachricht verwendet.

Die Adressvergabe wird, wie erwähnt, anhand des Pegels am Adresseingang Addr der Gebläseregler BL1, BL2 während der Anlagenkonfektionierung festgelegt und durch den Busbefehl in das EEPROM des Gebläsereglers übernommen.
Die identischen Gebläseregler BL1, BL2 reagieren jetzt auf 2 verschiedene Adressen.

Den Gebläsereglern werden über das Bussystem unterschiedliche Produkteigenschaften übertragen.

Durch die Adressvergabe erfolgt gleichzeitig eine Anpassung der statischen Leistungsbegrenzungskennlinie.

SPL FRONT  = SPL

SPL REAR = SPL FRONT * 0,66

**1. Datenbyte**

| D10 | D11 | D12 | D13 | D14 | D15 | D16 | D17 |
|-----|-----|-----|-----|-----|-----|-----|-----|
| 1 | 2 | 3 | 4 | 5 | 6 | 7 | 8 |
| LSB | | | | | | | MSB |

D10 ... D17: 8 Datenbits: 0 bis 250
Funktion: Vorgabe Sollwert Motorspannung

**2. Datenbyte**

| D20 | D21 | D22 | D23 | D24 | D25 | D26 | D27 |
|-----|-----|-----|-----|-----|-----|-----|-----|
| 9 | 10 | 11 | 12 | 13 | 14 | 15 | 16 |
| LSB | | | | | | | MSB |

D20 ... D23: 4 Datenbits: 0 bis 15
Funktion:

    Vorgabe Rampenzeitkonstante $\Delta U_{motor}$ / s

D24 ... D27: 4 Datenbits:
Funktion:

    Vorgabe der Leistungsbegrenzungskennline (Parametrisierung)
    0000: Leistungsbegrenzungskennlinie 1 (360 W Motor)
    0101: Leistungsbegrenzungskennlinie 2 (320 W Motor)
    1111: Leistungsbegrenzungskennlinie 3 (280 W Motor)

Im Fahrzeug x ist ein 360 W Front Klimagebläse verbaut.
Die Klimaregeleinheit im Fahrzeug x überträgt in den Datenbits D24 bis D27 der Nachricht für den Frontklimagebläseregler den Wert 0000. Die Produkteigenschaft des Gebläsereglers wird an die Bedingungen im Fahrzeug x angepasst.
Im Fahrzeug x ist gleichzeitig ein 185 W Heck Klimagebläse verbaut.
Die Klimaregeleinheit im Fahrzeug x überträgt in den Datenbits D24 bis D27 der Nachricht für den Heckklimagebläseregler den Wert 1111. Die Produkteigenschaft des Gebläsereglers wird an die Bedingungen der Heckanlage im Fahrzeug x angepasst.
Im Ersatzteilwesen des Fahrzeugherstellers wird nur ein Gebläseregler für beide Fahrzeuge geführt.
Die im Gebläseregler vorhandenen identischen Berechnungsroutinen werden durch die Adressvergabe statisch an den Einsatzort des Klimagebläses (Front-Heck) angepasst.

**3. Datenbyte**

| D30 | D31 | D32 | D33 | D34 | D35 | D36 | D37 |
|-----|-----|-----|-----|-----|-----|-----|-----|
| 17 | 18 | 19 | 20 | 21 | 22 | 23 | 24 |
| LSB | | | | | | | MSB |

D30 ... D37: 8 Datenbits:
Funktion: TBD

**4. Datenbyte**

| D40 | D41 | D42 | D43 | D44 | D45 | D46 | D47 |
|-----|-----|-----|-----|-----|-----|-----|-----|
| 25 | 26 | 27 | 28 | 29 | 30 | 31 | 32 |
| LSB | | | | | | | MSB |

D40 ... D47: 8 Datenbits:
Funktion: TBD

**Checksummenbyte**

| C0 | C1 | C2 | C3 | C4 | C5 | C6 | C7 |
|-----|-----|-----|-----|-----|-----|-----|-----|
| 33 | 34 | 35 | 36 | 37 | 38 | 39 | 40 |
| LSB | | | | | | | MSB |

C0 ... C7: 8-Datenbits: ADD-Checksumme mit Carry invertiert über die Datenbytes 1 bis 4

**Viertes Applikationsbeispiel**

Die nachfolgende Beschreibung beschreibt ein Beispiel für die Parametrisierung durch eine Initialisierungsnachricht. Dieses Beispiel ist eine Parametrisierung von statischen und dynamischen Produkteigenschaften.

**Parametrisierung Initialisierung**

Die Parametrisierung der dynamischen Produkteigenschaften erfolgt durch einmaliges oder mehrmaliges Übertragen von Parametern für dynamische und statische Schutzfunktion.

Das Beispiel zeigt die Auswahl der statischen Leistungsbegrenzung und die Eigenschaften für eine dynamische Anpassung der Temperaturbegrenzung.

**1. Datenbyte**

| D10 | D11 | D12 | D13 | D14 | D15 | D16 | D17 |
|-----|-----|-----|-----|-----|-----|-----|-----|
| 1 | 2 | 3 | 4 | 5 | 6 | 7 | 8 |
| LSB | | | | | | | MSB |

D10 ... D17: 8 Datenbits: 255
Funktion: Kennung Initialisierungsnachricht

**2. Datenbyte**

| D20 | D21 | D22 | D23 | D24 | D25 | D26 | D27 |
|-----|-----|-----|-----|-----|-----|-----|-----|
| 9 | 10 | 11 | 12 | 13 | 14 | 15 | 16 |
| LSB | | | | | | | MSB |

D20 ... D23: 3 Bits
Funktion:

> TBL0 Schaltschwelle für Blaslufttemperatur
> 0°C bis 40°C Auflösung 4K

D24 ... D27: 4 Datenbits:
Funktion:

Vorgabe der Leistungsbegrenzungskennline (Parametrisierung) Vorgabewert:
0000: Leistungsbegrenzungskennlinie 1 (360 W Motor)
0101: Leistungsbegrenzungskennlinie 2 (320 W Motor)
1111: Leistungsbegrenzungskennlinie 3 (280 W Motor)

**3. Datenbyte**

| D30 | D31 | D32 | D33 | D34 | D35 | D36 | D37 |
|-----|-----|-----|-----|-----|-----|-----|-----|
| 17  | 18  | 19  | 20  | 21  | 22  | 23  | 24  |
| LSB |     |     |     |     |     |     | MSB |

D30 ... D33: 4 Datenbits:
Funktion:
Temperatur Verschiebung der Zulässigen Maxtemperatur + 0 ... 30 K
Auflösung 2 K
D34 ... D37: 4 Datenbits:
Funktion:
TBLMAX = TBL0 + Wert (D34...D37) in 0 ... 30 K

**4. Datenbyte**

| D40 | D41 | D42 | D43 | D44 | D45 | D46 | D47 |
|-----|-----|-----|-----|-----|-----|-----|-----|
| 25  | 26  | 27  | 28  | 29  | 30  | 31  | 32  |
| LSB |     |     |     |     |     |     | MSB |

D40 ... D46: 7 Datenbits:
Funktion:

  Wertebereich 0 ... 127
  Zulässige Maximaltemperatur in °C
  D47: TBD

**Checksummenbyte**

| C0  | C1  | C2  | C3  | C4  | C5  | C6  | C7  |
|-----|-----|-----|-----|-----|-----|-----|-----|
| 33  | 34  | 35  | 36  | 37  | 38  | 39  | 40  |
| LSB |     |     |     |     |     |     | MSB |

C0 ... C7: 8-Datenbits: ADD-Checksumme mit Carry invertiert über die Datenbytes 1 bis 4

**Beispiel: Dateninhalt einer Initialisierungsnachricht**

Vorgabe

  Datenbyte 1:
  0xFF (Initialisierungsnachricht)
  Datenbyte 2:
  0x0C (360W Klimagebläse, Schaltschwelle TBL0 50°C)
  Datenbyte 3:
  0xA5 (Anhebung Max. Temperatur um + 20K bei TBL = 60K)
  Datenbyte 4:

0x5A (Maximaltemperatur 90°C)

**Beispiel: Dateninhalt Standardnachricht**

**1. Datenbyte**

| D10 | D11 | D12 | D13 | D14 | D15 | D16 | D17 |
|-----|-----|-----|-----|-----|-----|-----|-----|
| 1 | 2 | 3 | 4 | 5 | 6 | 7 | 8 |
| LSB | | | | | | | MSB |

D10 ... D17: 8 Datenbits: 0 bis 250
Funktion: Vorgabe Sollwert Motorspannung

**2. Datenbyte**

| D20 | D21 | D22 | D23 | D24 | D25 | D26 | D27 |
|-----|-----|-----|-----|-----|-----|-----|-----|
| 9 | 10 | 11 | 12 | 13 | 14 | 15 | 16 |
| LSB | | | | | | | MSB |

D20 ... D23: 4 Datenbits: 0 bis 15
Funktion:
Vorgabe Rampenzeitkonstante $\Delta U_{motor}$ / s
D24 ... D26: 4 Datenbits:
Funktion:
Wert Umluftklappe 0 % ... 100% Auflösung 6,25%

**3. Datenbyte**

| D30 | D31 | D32 | D33 | D34 | D35 | D36 | D37 |
|-----|-----|-----|-----|-----|-----|-----|-----|
| 17 | 18 | 19 | 20 | 21 | 22 | 23 | 24 |
| LSB | | | | | | | MSB |

D30 ... D37: 8 Datenbits:
Funktion: Blaslufttemperatur akt. in °C
Wertebereich 0 ... 190 → -40°C bis 150°C

**4. Datenbyte**

| D40 | D41 | D42 | D43 | D44 | D45 | D46 | D47 |
|-----|-----|-----|-----|-----|-----|-----|-----|
| 25 | 26 | 27 | 28 | 29 | 30 | 31 | 32 |
| LSB | | | | | | | MSB |

D40 ... D43: 4 Datenbits:
Funktion TBD
D44 ... D47: 4 Datenbits:
Funktion:
Wert Fußraumklappe AUF 0 % ... 100% Auflösung 6,25%

**Checksummenbyte**

| C0 | C1 | C2 | C3 | C4 | C5 | C6 | C7 |
|-----|-----|-----|-----|-----|-----|-----|-----|
| 33 | 34 | 35 | 36 | 37 | 38 | 39 | 40 |

(fortgesetzt)

| C0 | C1 | C2 | C3 | C4 | C5 | C6 | C7 |
|----|----|----|----|----|----|----|----|
| LSB | | | | | | | MSB |

C0 ... C7: 8-Datenbits: ADD-Checksumme mit Carry invertiert über die Datenbytes 1 bis 4

**Beispiel für eine Dynamische Maximaltemperaturanpassung**

Bei Blaslufttemperaturen < 50°C ist eine Maximaltemperatur von 90°C für den Gebläseregler zulässig.
Liegt die Blaslufttemperatur über 50°C wird die zulässige Maximaltemperatur im Bereich 50°C bis 60°C linear um 20K angehoben.
Die Anhebung wird gleichzeitig noch durch die Stellung der Umluftklappe und Fußraumklappe bewertet.
Der Maximalwert 20K wird nur bei 100% Umluft und 100% Fußraum AUF erreicht.
Die Bewertung der Umluftklappe und der Fußraumklappe führt im Bereich zwischen 100% bis 70% zu einer linearen Absenkung um je 5K.
Durch die dynamische Anpassung der zulässigen Maximaltemperatur wird die Schutzfunktion durch die Temperaturabschaltung verbessert.
Bei niederen Umgebungstemperaturen (Blasluft) oder bei Klappenstellungen die zu einer besseren Entwärmung des Produkts führen wird auf eine niedrigere maximal zulässige Gebläsereglertemperatur geregelt.

**Weitere Beispiele des erfindungsgemäßen Verfahrens**

A: Bedingt durch das Schalten von Verbrauchern und Generatorspannungsänderungen in Folge von Lastwechsel, Drehzahländerung, Start/Stop-Betrieb des Verbrennungsmotors, Bremsenenergierückspeisung u.s.w. ist die Bordnetzspannung nicht konstant. Eine Änderung der Bordnetzspannung wird vom Klimagebläseregler ausgeregelt, d.h. die Motordrehzahl ist unabhängig von der Bordnetzspannung. Zur Verbesserung der Ausregelzeit wird dem Klimagebläseregler die Änderung der Bordnetzspannung angezeigt. Das Bordnetzenergiemanagement stellt dem Klimagebläseregler diese Information idealerweise im Vorhinein zur Verfügung. Somit kann bevorstehenden Änderungen entgegengesteuert werden und gegebenenfalls der Regelalgorithmus geändert werden.
B: Bei Umgebungstemperaturen unter dem Gefrierpunkt kann der vereiste Rotor des Klimagebläses blockieren. Der Anlaufstrom wird durch eine Parametrierungsübertragung erhöht, somit ergibt sich ein erhöhtes Losreißmoment. Der Blockierstrom wird erhöht, somit erhöhte Eigenerwärmung, die zur Enteisung des Rotors führt.
C: Die Stromaufnahme des Klimagebläses ist unter anderem abhängig von der Toleranzlage des Gebläsemotors, der Ausführung der Klimaanlage und der Fahrzeugvariante.
Die individuelle Motorkennlinie des Gebläsemotors wird ausgemessen. Die Bewertung erfolgt in Abhängigkeit von den Umgebungsbedingungen (z.B. Staudruck, Temperatur). Die Schutzfunktionen werden an den tatsächlich verbauten Motor angepasst.
Die erforderlichen Informationen werden per Datentransfer (z.B. Bussystem, CAN) von einem Steuer/Regelgerät übermittelt. Möglicherweise sind diese Informationen nur indirekt verfügbar.
D: Wenn die Werte für Staudruck und Temperatur der Ansaugluft nicht anhand von Messwerten vorliegen, dann können diese aus bereits bekannten Fahrzeugdaten (z.B. Außentemperatur, Heizwassertemperatur, Wärmetauschertemperatur, Verdampfertemperatur, Innenraumtemperatur, Luftklappenstellung, Fahrgeschwindigkeit, Fensterstellung, Schiebedachstellung, Verdeckstellung (Cabrio) u.s.w.) ermittelt werden.
Es ist zu bemerken, dass die obige Beschreibung beispielhaft programmgesteuerte Buskomponenten unter Verwendung üblicher Mikroprozessorstrukturen beschreibt. Dies dient jedoch lediglich zur Veranschaulichung, und die Buskomponenten können auch unter Verwendung von zustandsgesteuerten Vorrichtungen realisiert werden.
Das erfindungsgemäße Verfahren wird hier bevorzugt zur Parametrisierung von Buskomponenten eines Fahrzeuginnenraumklimatisierungssystems unter Einsatz eines LIN-Bussstems und dessen standardisierter Datenstruktur verwendet. Stattdessen können auch Buskomponenten anderer Steuer/-Regelstrukturen mit dem erfindungsgemäßen Parametrisierungsverfahren unter Einsatz einer Master/Slave-Busstruktur parametrisiert werden.

**Patentansprüche**

1. Verfahren zur Parametrisierung fahrzeugspezifischer Eigenschaften von Buskomponenten (A1, ... An, BL1, BL2, S1, S2) eines in einem Fahrzeug eingesetzten Bussystems, wobei die Buskomponenten (A1, ... An, BL1, BL2, S1, S2) als programmgesteuerte Slave-Einheiten einer Kraftfahrzeuginnenraumklimatisierung durch das eine Master-Slave-Struktur aufweisende Bussystem (1) mit einer als Fahrzeugklimaregeleinheit ausgestalteten, programmgesteuerten Master-Einheit (M) kommunizieren können, und wobei den Buskomponenten (A1, ... An, BL1, BL2, S1, S2) individuell zugeordnete Parameter von der Master-Einheit (M) durch einen Parametrisierungsschritt einprogrammiert werden, **dadurch gekennzeichnet, dass** dieser Parametrisierungsschritt Innerhalb des Datenprotokolls des Bussystems (1) zur Übertragung statischer und/oder dynamisch veränderlicher Parameter von der Master-Einheit (M) ereignisgetriggert für jede Buskomponente einmalig zum Zeltpunkt und am Ort des Einbaus der Buskomponenten in das Kraftfahrzeug und mehrfach wenigstens bei jedem Neustart des Kraftfahrzeugs durchgeführt wird.

2. Verfahren nach Anspruch 1, **dadurch gekennzeichnet, dass** die von der Master-Einheit (M) im Parametrisierungsschritt zur jeweiligen Buskomponente (A1, ... An, BL1, BL2, S1, S2) übertragenen Parameter in der jeweiligen Buskomponente nicht dauerhaft gespeichert und bei jedem Parametrisierungsschritt in der jeweiligen Buskomponente aktualisiert bzw. überschrieben werden.

3. Verfahren nach einem der vorhergehenden Ansprüche, **dadurch gekennzeichnet, dass** die Im Parametrisierungsschritt von der Fahrzeugklimaregeleinheit (M) an einen als Buskomponente eingesetzten Gebläseregler (BL1, BL2) übertragenen statischen Parameter insbesonder sind:

    - Wert der Maximalstrombegrenzung,
    - Wert des Temperaturschutzes,
    - Wert und Steigung der Leistungsbegrenzung für den Reglerschutz und den Motorschutz,
    - Regelkonstanten für Spannungsregler,
    - Regelkonstanten für Stromregler,
    - Regelkonstanten für Temperaturregler,
    - Verstärkungsfaktoren,
    - Abgleichwerte.

4. Verfahren nach einem der Ansprüche 1 bis 3, **dadurch gekennzeichnet, dass** im Parametrisierungsschritt von der Fahrzeugklimaregeleinheit (M) an ein als Buskomponente eingesetztes Zuheizsystem insbesondere folgende Parameter übertragen werden:

    - Wert des Temperaturschutzes,
    - Regelkreiskonstanten,
    - Verstärkungsfaktoren,
    - Abgleichwerte.

5. Verfahren nach einem der Ansprüche 1 bis 3, **dadurch gekennzeichnet, dass** die von der Fahrzeugklimaregeleinheit (M) im Parametrisierungsschritt übertragenen dynamischen Parameter Schutzfunktionen eines Klimagebläses betreffen und an einen als Buskomponente eingesetzten Gebläseregler (BL1, BL2) übertragen werden, wobei diese Schutzfunktionen insbesondere sind:

    - eine Gebläsemotorstrombegrenzung und/oder
    - eine Gebläsemotorleistungsbegrenzung und/oder
    - eine Gebläsemotortemperaturbegrenzung.

6. Verfahren nach Anspruch 5, **dadurch gekennzeichnet, dass** die Fahrzeugklimaregeleinheit (M) dem Gebläseregler (BL1, BL2) einen dem momentanen und/oder zu erwartenden Staudruck entsprechenden Parameter überträgt.

7. Verfahren nach Anspruch 5 oder 6, **dadurch gekennzeichnet, dass** von der Fahrzeugklimaregeleinheit (M) im Parametrisierungsschritt ein einer Veränderung der Bordnetzspannung ($V_{HATT}$) des Kraftfahrzeugs entsprechender Parameter dem Gebläseregler (BL1, BL2) übertragen wird.

8. Verfahren nach Anspruch 6 oder 7, **dadurch gekennzeichnet, dass** der dem zu erwartenden Staudruck entsprechende Parameter und der einer erwarteten Veränderung der Bordnetzspannung($V_{BA11}$) entsprechende Parameter von der Fahrzeugklimaregeleinheit (M) vor dem Zeitpunkt der tatsächlichen Änderung dieser Größen an den Gebläseregler (BL1, BL2) übertragen werden.

9. Verfahren nach Anspruch 8, **dadurch gekennzeichnet, dass** der Gebläseregler (BL1, BL2) auf Grund der von der Fahrzeugklimaregeleinheit (M) übertragenen Parameter eine Vorsteuerung ausführt.

10. Verfahren nach Anspruch 8 oder 9, **dadurch gekennzeichnet, dass** der Gebläseregler (BL1, BL2) auf Grund der von der Fahrzeugklimaregeleinheit (M) übertragenen Parameter seinen momentanen Regelalgorithmus ändert.

11. Verfahren nach Anspruch 5, **dadurch gekennzeichnet, dass** von der Fahrzeugklimaregeleinheit ein der Umgebungstemperatur entsprechender Parameter an den Gebläseregler (BL1, BL2) übertragen wird.

12. Verfahren nach Anspruch 11, **dadurch gekennzeichnet, dass** als die Umgebungstemperatur eine der Temperatur der vom Klimagebläse angesaugten Luft entsprechende Information übertragen wird.

13. Verfahren nach einem der Ansprüche 6 bis 12, **dadurch gekennzeichnet, dass** der Staudruck und/oder die Temperatur der vom Gebläse angesaugten Luft jeweils gemessen werden.

14. Verfahren nach einem der Ansprüche 6 bis 12, **dadurch gekennzeichnet, dass** der Staudruck und/oder die Temperatur der vom Gebläse angesaugten Luft von der Fahrzeugklimaregeleinheit (M) jeweils aus bekannten Fahrzeugbetriebsbedingungen ermittelt werden.

## Claims

1. Method for parameterizing vehicle-specific properties of bus components (A1, ... An, BL1, BL2, S1, S2) of a bus system used in a vehicle, wherein the bus components (A1, ... An, BL1, BL2, S1, S2) can communicate as programme-controlled slave units of a motor vehicle passenger-compartment air-conditioning system by means of the bus system (1) which has a master/slave structure with a programme-controlled master unit (M) which is configured as a vehicle air-conditioning control unit, and wherein parameters which are individually assigned to the bus components (A1, ... An, BL1, BL2, S1, S2) are programmed in by the master unit (M) by means of a parameterization step, **characterized in that** this paramerization step is carried out in an event-triggered fashion for each bus component once at the time and at the location of installation of the bus components in the motor vehicle and repeatedly at least whenever the motor vehicle is restarted, within the data protocol of the bus system (1) in order to transmit static and/or dynamically variable parameters by the master unit (M).

2. Method according to Claim 1, **characterized in that** the parameters which are transmitted by the master unit (M) to the respective bus component (A1, ... An, BL1, BL2, S1, S2) in the parameterization step are not stored permanently in the respective bus components and are updated or overwritten at every parameterization step in the respective bus component.

3. Method according to one of the preceding claims, **characterized in that** the static parameters which are transmitted to a blower controller (BL1, BL2) used as a bus component by the vehicle air-conditioning control unit (M) in the parameterization step are, in particular:

   - the maximum current limitation value,
   - the temperature protection value,
   - the value and gradient of the power limitation for the controller protection and the engine protection,
   - control constants for the voltage controller,
   - control constants for the current controller,
   - control constants for the temperature controller,
   - boosting factors, and
   - adjustment values.

4. Method according to one of Claims 1 to 3, **characterized in that** in the parameterization step, in particular, the following parameters are transmitted by the vehicle air-conditioning control unit (M) to a heating system which is used as a bus component:

   - the temperature protection value,
   - control circuit constants,
   - boosting factors and

- adjustment values.

**5.** The method as claimed in one of Claims 1 to 3, **characterized in that** the dynamic parameters which are transmitted by the vehicle air-conditioning control unit (M) in the parameterization step relate to protection function of an air-conditioning blower and are transmitted to a blower controller (BL1, BL2) used as a bus component, wherein these protection functions are, in particular:

- a blower motor current limitation and/or
- a blower motor power limitation and/or
- a blower motor temperature limitation.

**6.** Method according to Claim 5, **characterized in that** the vehicle air-conditioning control unit (M) transmits to the blower controller (BL1, BL2) a parameter corresponding to the instantaneous and/or expected ram pressure.

**7.** Method according to Claim 5 or 6, **characterized in that** in the parameterization step a parameter corresponding to a change in the on-board power system voltage ($V_{BATT}$) of the motor vehicle is transmitted to the blower controller (BL1, BL2) by the vehicle air-conditioning control unit (M).

**8.** Method according to Claim 6 or 7, **characterized in that** the parameter corresponding to the expected ram pressure and the parameter corresponding to an expected change in the on-board power system voltage ($V_{BATT}$) are transmitted by the vehicle air-conditioning control unit (M) to the blower controller (BL1, BL2) before the time of the actual change in these variables.

**9.** Method according to Claim 8, **characterized in that** the blower controller (BL1, BL2) carries out pilot control on the basis of the parameters transmitted by the vehicle air-conditioning control unit (M).

**10.** Method according to Claim 8 or 9, **characterized in that** the blower controller (BL1, BL2) changes its instantaneous control algorithm on the basis of the parameters transmitted by the vehicle air-conditioning control unit (M).

**11.** Method according to Claim 5, **characterized in that** a parameter corresponding to the ambient temperature is transmitted by the vehicle air-conditioning control unit to the blower controller (BL1, BL2).

**12.** Method according to Claim 11, **characterized in that** an information item corresponding to the temperature of the air sucked in by the air-conditioning blower is transmitted as the ambient temperature.

**13.** Method according to one of Claims 6 to 12, **characterized in that** the ram pressure and/or the temperature of the air sucked in by the blower are each measured.

**14.** Method according to one of Claims 6 to 12, **characterized in that** the ram pressure and/or the temperature of the air sucked in by the blower are each determined by the vehicle air-conditioning control unit (M) on the basis of known vehicle operating conditions.

**Revendications**

**1.** Procédé de paramétrage des propriétés spécifiques au véhicule de composants de bus (A1, ... An, BL1, BL2, S1, S2) d'un système de bus embarqué dans un véhicule, les composants de bus (A1, ... An, BL1, BL2, S1, S2) pouvant communiquer en tant qu'unités esclaves commandées par programme d'une climatisation d'habitacle de véhicule automobile avec une unité maître (M) commandée par programme prenant la forme d'une unité de climatisation du véhicule par le biais du système de bus (1) comportant une structure maître-esclave et des paramètres associés individuellement aux composants de bus (A1, ... An, BL1, BL2, S1, S2) pouvant être programmés par l'unité maître (M) par le biais d'une étape de paramétrage, **caractérisé en ce que** cette étape de paramétrage est réalisée dans le cadre du protocole de données du système de bus (1) en vue de transmettre des paramètres statiques et/ou variant dynamiquement de l'unité maître (M) déclenchée pour chaque composant de bus une fois lors de l'encastrement des composants de bus dans le véhicule automobile et à plusieurs reprises au moins à chaque redémarrage du véhicule automobile.

**2.** Procédé selon la revendication 1, **caractérisé en ce que** le paramètre transmis de l'unité maître (M) vers le composant de bus (A1, ... An, BL1, BL2, S1, S2) respectif lors de l'étape de paramétrage n'est pas mémorisé de façon durable dans le composant de bus respectif et est actualisé et/ou écrasé à chaque étape de paramétrage dans le composant de bus respectif.

3. Procédé selon l'une quelconque des revendications précédentes, **caractérisé en ce que** les paramètres statiques transmis lors de l'étape de paramétrage par l'unité de climatisation du véhicule (M) à un système de régulation de soufflante (BL1, BL2) servant de composant de bus sont notamment :

- la valeur de limitation maximale du débit ;
- la valeur de protection antisurchauffe ;
- la valeur et la pente de la limitation de puissance pour la protection du système de régulation et la protection du moteur ;
- les constantes de réglage du système de régulation de la tension ;
- les constantes de réglage du système de régulation du débit ;
- les constantes de réglage du système de régulation de la température ;
- des facteurs renforçants ;
- des valeurs de compensation.

4. Procédé selon l'une quelconque des revendications 1 à 3, **caractérisé en ce que** les paramètres suivants sont notamment transmis lors de l'étape de paramétrage par l'unité de climatisation du véhicule (M) à un système de chauffage servant de composant de bus :

- la valeur de protection antisurchauffe ;
- les constantes du circuit de régulation ;
- les facteurs renforçants ;
- les valeurs de compensation.

5. Procédé selon l'une quelconque des revendications 1 à 3, **caractérisé en ce que** les paramètres dynamiques transmis par l'unité de climatisation du véhicule (M) lors de l'étape de paramétrage concernent les fonctions de protection d'une soufflante d'air climatisé et sont transmis à un système de régulation de soufflante (BL1, BL2) servant de composant de bus, ces fonctions de protection étant notamment :

- une limitation du débit du moteur de soufflante ; et/ou
- une limitation de puissance du moteur de soufflante ; et/ou
- une limitation de température du moteur de soufflante.

6. Procédé selon la revendication 5, **caractérisé en ce que** l'unité de climatisation du véhicule (M) transmet au système de régulation de soufflante (BL1, BL2) un paramètre correspondant à la pression dynamique momentanée et/ou attendue.

7. Procédé selon la revendication 5 ou 6, **caractérisé en ce qu'**un paramètre correspondant à une variation de la tension de réseau de bord ($V_{BATT}$) du véhicule automobile est transmis au système de régulation de soufflante (BL1, BL2) par l'unité de climatisation du véhicule (M) lors de l'étape de paramétrage.

8. Procédé selon la revendication 6 ou 7, **caractérisé en ce que** le paramètre correspondant à la pression dynamique attendue et le paramètre correspondant à une variation de la tension de réseau de bord ($V_{BATT}$) attendue sont transmis par l'unité de climatisation du véhicule (M) au système de régulation de soufflante (BL1, BL2) avant le moment de la variation effective de ces grandeurs.

9. Procédé selon la revendication 8, **caractérisé en ce que** le système de régulation de soufflante (BL1, BL2) exécute une précommande sur la base des paramètres transmis par l'unité de climatisation du véhicule (M).

10. Procédé selon la revendication 8 ou 9, **caractérisé en ce que** le système de régulation de soufflante (BL1, BL2) modifie son algorithme de régulation momentané sur la base des paramètres transmis par l'unité de climatisation du véhicule (M).

11. Procédé selon la revendication 5, **caractérisé en ce qu'**un paramètre correspondant à la température ambiante est transmis par l'unité de climatisation du véhicule au système de régulation de soufflante (BL1, BL2).

**12.** Procédé selon la revendication 11, **caractérisé en ce que** la température ambiante transmise est une information correspondant à la température de l'air aspiré par la soufflante d'air climatisé.

**13.** Procédé selon l'une quelconque des revendications 6 à 12, **caractérisé en ce que** la pression dynamique et/ou la température de l'air aspiré par la soufflante sont respectivement mesurées.

**14.** Procédé selon l'une quelconque des revendications 6 à 12, **caractérisé en ce que** la pression dynamique et/ou la température de l'air aspiré par la soufflante sont respectivement calculées par l'unité de climatisation du véhicule (M) à partir de conditions de fonctionnement du véhicule connues.

FIG. 1

EP 1 439 670 B1

# FIG. 2

CANA   CANB

FIG. 3

# FIG. 4A

Imot

50A

25A

Leistungsbegrenzungskennlinie
für P=0

I mot bei P=0

0A

0V  2V  4V  6V  8V  10V  12V

U mot

# FIG. 4B

Imot

50A

25A

Leistungsbegrenzungskennlinie
für Pmax

I mot bei Pmax

0A

0V  2V  4V  6V  8V  10V  12V

Umot

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0237923 A
- WO 0115920 A
- EP 1223710 A
- US 6098098 A